# EUROPÄISCHE PATENTSCHRIFT

(11) **EP 3 745 017 B1**
(45) Veröffentlichungstag und Bekanntmachung des Hinweises auf die Patenterteilung: **04.12.2024**
(21) Anmeldenummer: 19177334.0
(22) Anmeldetag: 29.05.2019
(51) Int. Cl.: F21S 43/27, F21S 43/237, F21S 43/247, F21S 43/19, F21S 43/14

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(43) Veröffentlichungstag der Anmeldung: 02.12.2020
(73) Patentinhaber: ZKW Group GmbH, 3250 Wieselburg (AT)
(72) Erfinder: Staffenberger, Walter, 3643 Maria Laach (AT)
(74) Vertreter: Patentanwaltskanzlei Matschnig & Forsthuber OG

(56) Entgegenhaltungen:
- EP-A1- 2 775 197
- EP-A1- 3 346 306
- EP-A1- 3 382 269
- EP-A1- 3 396 239
- US-A1- 2005 270 794

## Beschreibung

Die Erfindung betrifft eine Beleuchtungsvorrichtung für einen Kraftfahrzeugscheinwerfer., wobei die Beleuchtungsvorrichtung Folgendes umfasst:
- eine Leiterplatte, aufweisend zumindest eine Lichtquelle, welche mit der Leiterplatte verbunden ist und eingerichtet ist, Licht in eine Hauptabstrahlrichtung zu emittieren,
- einen Lichtleiter, aufweisend ein Ende, welches als Lichteinkoppelfläche ausgebildet ist, wobei der Lichtleiter zum Leiten von Licht der zumindest einen Lichtquelle zugeordnet ist, welches Licht an der Lichteinkoppelfläche in den Lichtleiter einkoppelbar ist, wobei der Lichtleiter in eine Endlage an der Leiterplatte bringbar ist, in welcher Endlage die Lichteinkoppelfläche in einer festgelegten Ausrichtung orthogonal zur Hauptabstrahlrichtung und in einem festgelegten Abstand entlang der Hauptabstrahlrichtung bezüglich der Lichtquelle orientiert ist,
- eine Positioniereinrichtung, welche eingerichtet ist, die Ausrichtung der Lichteinkoppelfläche bezüglich der Lichtquelle entlang der Hauptabstrahlrichtung der Lichtquelle sowie in einer Normalebene der Hauptabstrahlrichtung festzulegen, wobei die Positioniereinrichtung zur Ausrichtung der Lichteinkoppelfläche in der Normalebene zumindest ein erstes Positionierungsmittelpaar aufweist, welches einen Vorsprung, welcher sich parallel zur Hauptabstrahlrichtung erstreckt, und eine zu dem Vorsprung korrespondierende Öffnung umfasst, und wobei
   die Positioniereinrichtung zur Ausrichtung der Lichteinkoppelfläche entlang der Hauptabstrahlrichtung der Lichtquelle zumindest ein zweites Positionierungsmittelpaar aufweist, welches einen Anschlag und eine zu dem Anschlag korrespondierende Anschlagsfläche umfasst, wobei der Lichtleiter jeweils ein Mittel des zumindest einen ersten Positionierungsmittelpaares und des zumindest einen zweiten Positionierungsmittelpaares aufweist und die Leiterplatte jeweils das verbleibende Mittel des zumindest einen ersten Positionierungsmittelpaares und des zumindest einen zweiten Positionierungsmittelpaares aufweist, und wobei
   der Lichtleiter durch Einführen des Vorsprung des zumindest einen ersten Positionierungsmittelpaares in die dazu korrespondierende Öffnung des zumindest einen ersten Positionierungsmittelpaares in die Endlage an der Leiterplatte bezüglich der zumindest einen Lichtquelle bringbar ist, wobei der eine Anschlag des zumindest einen zweiten Positionierungsmittelpaares bei Erreichen der Endlage an der dazu korrespondierenden Anschlagsfläche des zumindest einen zweiten Positionierungsmittelpaares anschlägt, und
- ein Sicherungsmittel, welches eingerichtet ist, den Lichtleiter in der Endlage an der Leiterplatte zu sichern und die Lichteinkoppelfläche in Bezug auf die Lichtquelle in Position zu halten.

Ferner betrifft die Erfindung einen Kraftfahrzeugscheinwerfer, umfassend zumindest eine erfindungsgemäße Beleuchtungsvorrichtung.

Die EP 2 775 197 A1 offenbart eine Beleuchtungsvorrichtung für Kraftfahrzeugscheinwerfer aus dem Stand der Technik.

In herkömmlichen Beleuchtungsvorrichtungen wird der Lichtleiter, dessen Lichteinkoppelfläche bezüglich einer Lichtquelle, welche auf einer Leiterplatte angeordnet ist, ausgerichtet ist, nicht direkt auf der Leiterplatte selbst befestigt.

Aufgrund von steigenden Temperaturen beim Betrieb der Lichtquelle, dehnen sich die Materialien der Leiterplatte und des Lichtleiters bzw. der Lichteinkoppelfläche, welche sich in der Regel in nächster Nähe zur Lichtquelle befindet, aufgrund einer Wärmedehnung aus.

Dadurch verändert sich jedoch der Abstand zwischen der Lichteinkoppelfläche des Lichtleiters und der zugeordneten Lichtquelle, was unterschiedliche lichttechnische Ergebnisse hervorruft, beispielsweise auch eine Zerstörung der Lichtquelle.

Es ist eine Aufgabe der Erfindung eine verbesserte Beleuchtungsvorrichtung bereitzustellen.

Diese Aufgabe wird mit einer eingangs erwähnten Beleuchtungsvorrichtung dadurch gelöst, dass das Sicherungsmittel als eine federelastische U-förmige Klemme ausgebildet ist, wobei die Klemme lösbar an dem Lichtleiter und der Leiterplatte angeordnet ist und dabei den Lichtleiter und die Leiterplatte umgreift und gegeneinander drückt.

Durch die direkte Befestigung des Lichtleiters an der Leiterplatte bleibt der Abstand zwischen der Lichtquelle und der Lichteinkoppelfläche des Lichtleiters konstant. Somit wird die Ausdehnung des Gesamtsystems kompensiert.

Unter "Hauptabstrahlrichtung" ist die Richtung zu verstehen, in der die zumindest eine Lichtquelle infolge ihrer Richtwirkung am stärksten bzw. am meisten Licht abstrahlt.

Vorzugsweise liegt die Lichteinkoppelfläche des Lichtleiters in einer Normalebene zur Hauptabstrahlrichtung.

Es kann vorgesehen sein, dass das entsprechende Mittel des zumindest einen ersten Positionierungsmittelpaares, welches Mittel an dem Lichtleiter angeordnet ist, einstückig mit dem Lichtleiter hergestellt ist.

Beispielsweise wird der Lichtleiter mittels einem Spritzgießverfahren hergestellt.

Es kann vorgesehen sein, dass das entsprechende Mittel des zumindest einen zweiten Positionierungsmittelpaares, welches Mittel an dem Lichtleiter angeordnet ist, einstückig mit dem Lichtleiter hergestellt ist.

Es kann vorgesehen sein, dass die Positionierungseinrichtung zumindest zwei, vorzugsweise genau zwei, erste Positionierungsmittelpaare aufweist.

Dadurch wird eine genauere Lage in einer Normalebene zur Hauptabstrahlrichtung der Lichtquelle festgelegt. Beispielsweise können die Vorsprünge als zylindrische Stifte ausgebildet sein, wobei bei Vorhandensein eines einziges solchen Stiftes - eingesetzt in der dafür vorgesehenen Öffnung - die Leiterplatte bzw. der Lichtleiter weiterhin verdrehbar um den zylindrischen Stift ist, was nicht erwünscht ist.

Es kann vorgesehen sein, dass der Vorsprung des zumindest einen ersten Positionierungsmittelpaares an dem Lichtleiter und die Öffnung des zumindest einen ersten Positionierungsmittelpaares an der Leiterplatte angeordnet ist.

Dadurch wird eine schraubenlose Befestigung des Lichtleiters an der Leiterplatte erzielt. Somit macht die Leiterplatte die thermische Ausdehnung mit und der Abstand der Lichtquelle zur Lichteinkoppelfläche kann konstant gehalten werden.

Die von dem Klemmmittel verursachte Klemmkraft, welche die Leiterplatte und den Lichtleiter gegeneinander drückt, muss größer sein als die Kraft, welche durch eine Ausdehnung des Materials des Lichtleiters und der Leiterplatte entsteht, hervorgerufen durch eine Temperaturerhöhung, beispielsweise durch den Betrieb der Lichtquelle, der genannten Komponenten.

Es kann vorgesehen sein, dass die Positionierungseinrichtung zumindest zwei, vorzugsweise genau zwei, zweite Positionierungsmittelpaare aufweist.

Es kann vorgesehen sein, dass der Anschlag des zweiten Positionierungsmittelpaares an dem Lichtleiter und die Anschlagsfläche des zweiten Positionierungsmittelpaares an der Leiterplatte angeordnet ist.

Es kann vorgesehen sein, dass der Vorsprung formschlüssig in die dazu korrespondierende Öffnung eingreift.

Es kann vorgesehen sein, dass der Vorsprung die Leiterplatte in der Endlage des Lichtleiters an der Leiterplatte durchsetzt.

Es kann vorgesehen sein, dass die zumindest eine Lichtquelle als LED ausgebildet ist.

Vorzugsweise ist vorgesehen, dass im Fall, dass zwei oder mehr Leuchtdioden (LED) vorgesehen sind, jede Leuchtdiode unabhängig von den anderen Leuchtdioden angesteuert werden kann.

Jede Leuchtdiode kann somit unabhängig von den anderen Leuchtdioden einer Lichtquelle ein- und ausgeschaltet werden, und vorzugsweise, wenn es sich um dimmbare

Leuchtdioden handelt, auch unabhängig von den anderen Leuchtdioden der Lichtquelle gedimmt werden.

Die Aufgabe wird ebenso mit einem Kraftfahrzeugscheinwerfer gelöst, welcher zumindest eine erfindungsgemäße Beleuchtungsvorrichtung umfasst.

Nachfolgend wird die Erfindung anhand von beispielhaften Zeichnungen näher erläutert. Hierbei zeigt
Fig. 1 eine beispielhafte Beleuchtungsvorrichtung in einer Seitansicht mit einem Lichtleiter, welche ein als Lichteinkoppelfläche ausgebildetes Ende aufweist, und einer Leiterplatte, auf welcher eine Lichtquelle angeordnet ist, in einem nicht montierten Zustand der Beleuchtungsvorrichtung,
Fig. 2 die Beleuchtungsvorrichtung aus Fig. 1, wobei sich der Lichtleiter in einer Endlage an der Leiterplatte befindet,
Fig. 3 die Beleuchtungsvorrichtung aus Fig. 2, wobei sich der in der Endlage an der Leiterplatte befindende Lichtleiter und die Leiterplatte mittels eines Sicherungsmittels, welches als Klemmmittel bzw. Klemme ausgebildet ist, gesichert sind,
Fig. 4 eine perspektivische Ansicht der zusammengebauten Beleuchtungsvorrichtung aus Fig. 1, und
Fig. 5 eine weitere perspektivische Rückansicht der zusammengebauten Beleuchtungsvorrichtung aus Fig. 1.

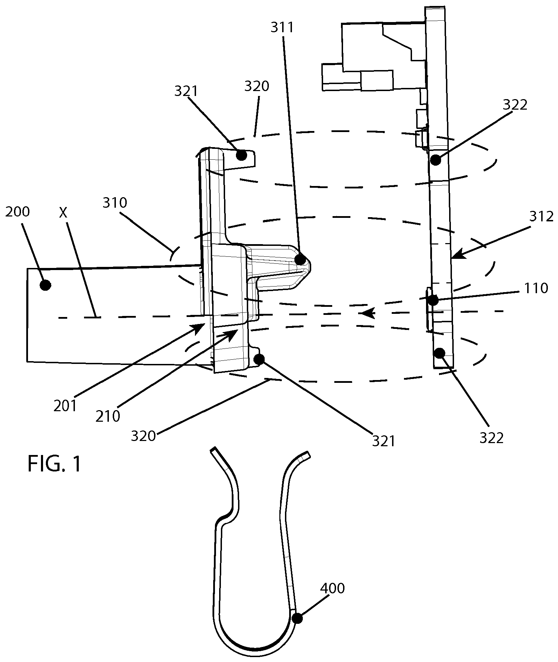

**Fig. 1** zeigt eine beispielhafte Beleuchtungsvorrichtung **10** für einen Kraftfahrzeugscheinwerfer, wobei die Beleuchtungsvorrichtung **10** eine Leiterplatte **100,** aufweisend eine Lichtquelle **110,** welche mit der Leiterplatte **100** verbunden ist und eingerichtet ist, Licht in eine Hauptabstrahlrichtung **X** zu emittieren, und einen Lichtleiter **200** umfasst, wobei der Lichtleiter **200** ein als Lichteinkoppelfläche **210** ausgebildetes Ende aufweist.

Unter "Hauptabstrahlrichtung" ist die Richtung zu verstehen, in der die Lichtquelle **110,** in diesem Fall eine LED, infolge ihrer Richtwirkung am stärksten bzw. am meisten Licht abstrahlt.

Der Lichtleiter **200** ist zum Leiten von Licht der Lichtquelle **110,** welche in diesem Beispiel als LED ausgebildet ist, zugeordnet, welches Licht an der Lichteinkoppelfläche **210** in den Lichtleiter **200** einkoppelbar ist.

Ferner ist der Lichtleiter **200** in eine Endlage **P1** an der Leiterplatte **100** bringbar, in welcher Endlage **P1** die Lichteinkoppelfläche **210** in einer festgelegten Ausrichtung orthogonal zur Hauptabstrahlrichtung **X** und in einem festgelegten Abstand **d** entlang der Hauptabstrahlrichtung **X** bezüglich der Lichtquelle **110** orientiert ist.

**Fig. 1** zeigt hierzu die Beleuchtungsvorrichtung **10** in einem noch nicht montierten Zustand bzw. nicht in der Endlage des Lichtleiters **200** an der Leiterplatte **100.**

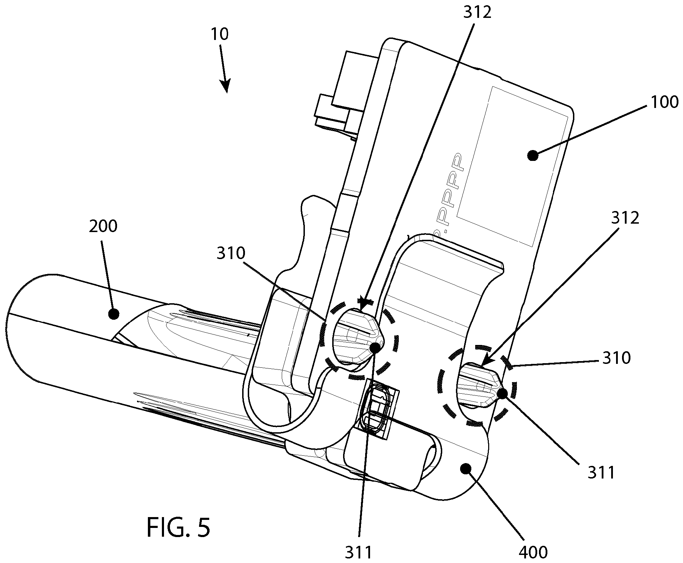

Die Beleuchtungsvorrichtung **10** umfasst weiters eine Positioniereinrichtung **300,** welche eingerichtet ist, die Ausrichtung der Lichteinkoppelfläche **210** bezüglich der Lichtquelle **110** entlang der Hauptabstrahlrichtung **X** der Lichtquelle **110** sowie in einer Normalebene der Hauptabstrahlrichtung **X** festzulegen, wobei die Positioniereinrichtung **300** zur Ausrichtung der Lichteinkoppelfläche **210** in der Normalebene zwei erste Positionierungsmittelpaare **310** aufweist, welche jeweils einen Vorsprung **311,** welcher sich parallel zur Hauptabstrahlrichtung **X** erstreckt, und eine zu dem Vorsprung **311** korrespondierende Öffnung **312** umfassen, wobei in **Fig. 1** aufgrund der dargestellten Seitenansicht lediglich nur ein erstes Positionierungspaar sichtbar ist. **Fig. 5** zeigt die zwei von der Beleuchtungsvorrichtung **10** umfassten zwei erste Positionierungspaare **310.**

Zur Ausrichtung der Lichteinkoppelfläche **210** entlang der Hauptabstrahlrichtung **X** der Lichtquelle **110** umfasst die Positioniereinrichtung **300** zwei zweite Positionierungsmittelpaare **320,** welche jeweils einen Anschlag **321** und eine zu dem Anschlag **321** korrespondierende Anschlagsfläche **322** umfassen.

In dem gezeigten Beispiel umfasst der Lichtleiter **200** die Vorsprünge **311** der zwei ersten Positionierungsmittelpaare **310** und die Anschläge **321** der zwei zweiten Positionierungsmittelpaare **320,** wobei die Leiterplatte **100** die jeweils verbleibenden Mittel der zwei ersten Positionierungsmittelpaare **310** und der zwei zweiten Positionierungsmittelpaare **320** aufweist. Die Mittel der ersten Positionierungspaare **310** sind hierbei einstückig mit dem Lichtleiter **200** hergestellt, beispielsweise mittels einem Spritzgießverfahren.

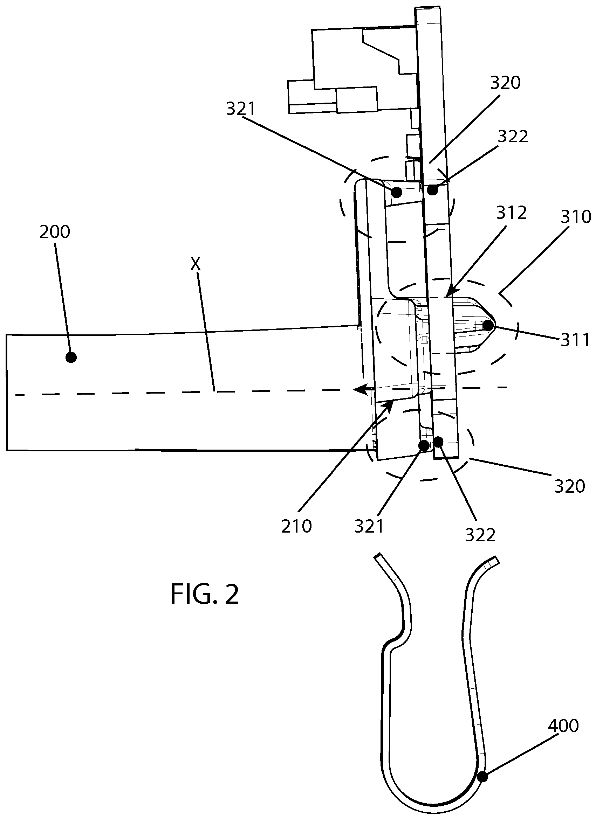

Durch Einführen der Vorsprünge **311** der ersten Positionierungsmittelpaare **310** in die dazu korrespondierenden Öffnung **312** ist der Lichtleiter **200** in die Endlage **P1** an der Leiterplatte **100** bezüglich der zumindest einen Lichtquelle **110** bringbar, wobei die Anschläge **321** der zweiten Positionierungsmittelpaare **320** bei Erreichen der Endlage **P1** an den dazu korrespondierenden Anschlagsflächen **322** anschlagen, wie in **Fig. 2** gezeigt ist. Dabei greifen die Vorsprünge **311** formschlüssig in korrespondierenden Öffnungen **312** ein und durchsetzen in der Endlage **P1** die Leiterplatte **100** vollständig.

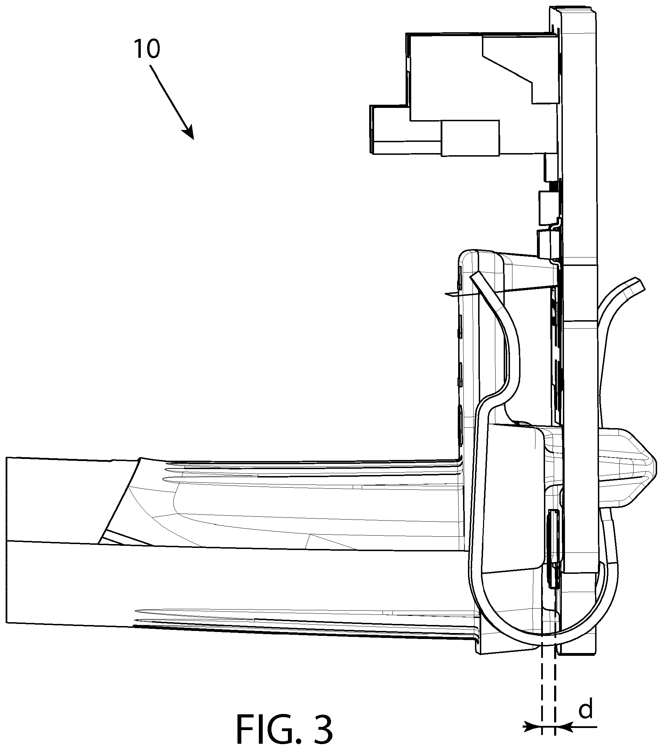

Weiters umfasst die Beleuchtungsvorrichtung ein Sicherungsmittel **400,** welches in dem gezeigten Beispiel als Klemmmittel bzw. Klemme ausgebildet ist, wobei das Sicherungsmittel **400** lösbar an dem Lichtleiter **200** und der Leiterplatte **100** angeordnet ist, und wobei das Sicherungsmittel **400** eingerichtet ist, den Lichtleiter **200** in der Endlage **P1** an der Leiterplatte **100** zu sichern und die Lichteinkoppelfläche **210** in Bezug auf die Lichtquelle **110** in Position zu halten, wie in **Fig. 3** dargestellt ist, wobei **Fig. 3** unter anderem einen montierten Zustand der Beleuchtungsvorrichtung **10** zeigt.

Hierbei ist darauf zu achten, dass die von dem Klemmmittel **400** verursachte Klemmkraft, welche die Leiterplatte **100** und den Lichtleiter **200** gegeneinander drückt, muss größer sein als die Kraft, welche durch eine Ausdehnung des Materials des Lichtleiters **200** und der Leiterplatte **100** entsteht, hervorgerufen durch eine Temperaturerhöhung der genannten Komponenten, beispielsweise durch den Betrieb der Lichtquelle **110.**

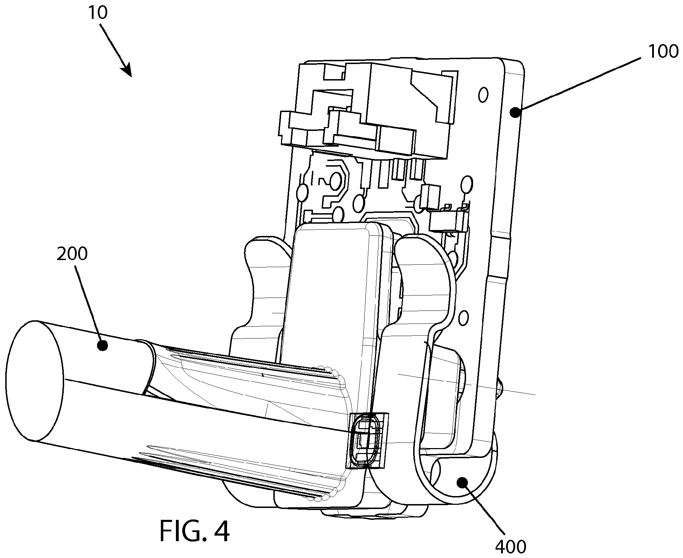

**Fig. 4** und **Fig. 5** zeigen jeweils perspektivische Ansichten der montierten Beleuchtungsvorrichtung **10.**

### BEZUGSZEICHENLISTE

| | |
|---|---|
| Beleuchtungsvorrichtung | 10 |
| Leiterplatte | 100 |
| Lichtquelle | 110 |
| Lichtleiter | 200 |
| Ende | 201 |
| Lichteinkoppelfläche | 210 |
| Positioniereinrichtung | 300 |
| Erstes Positionierungsmittelpaar | 310 |
| Vorsprung | 311 |
| Öffnung | 312 |
| Zweites Positionierungsmittelpaar | 320 |
| Anschlag | 321 |
| Anschlagsfläche | 322 |
| Hauptabstrahlrichtung | X |
| Endlage | P1 |
| Abstand | d |

## Patentansprüche

1. Beleuchtungsvorrichtung (10) für einen Kraftfahrzeugscheinwerfer, wobei die Beleuchtungsvorrichtung (10) Folgendes umfasst:
- eine Leiterplatte (100), aufweisend zumindest eine Lichtquelle (110), welche mit der Leiterplatte (100) verbunden ist und eingerichtet ist, Licht in eine Hauptabstrahlrichtung (X) zu emittieren,
- einen Lichtleiter (200), aufweisend ein Ende (201), welches als Lichteinkoppelfläche (210) ausgebildet ist, wobei der Lichtleiter (200) zum Leiten von Licht der zumindest einen Lichtquelle (110) zugeordnet ist, welches Licht an der Lichteinkoppelfläche (210) in den Lichtleiter (200) einkoppelbar ist, wobei der Lichtleiter (200) in eine Endlage (P1) an der Leiterplatte (100) bringbar ist, in welcher Endlage (P1) die Lichteinkoppelfläche (210) in einer festgelegten Ausrichtung orthogonal zur Hauptabstrahlrichtung (X) und in einem festgelegten Abstand (d) entlang der Hauptabstrahlrichtung (X) bezüglich der Lichtquelle (110) orientiert ist,
- eine Positioniereinrichtung (300), welche eingerichtet ist, die Ausrichtung der Lichteinkoppelfläche (210) bezüglich der Lichtquelle (110) entlang der Hauptabstrahlrichtung (X) der Lichtquelle (110) sowie in einer Normalebene der Hauptabstrahlrichtung (X) festzulegen, wobei die Positioniereinrichtung (300) zur Ausrichtung der Lichteinkoppelfläche (210) in der Normalebene zumindest ein erstes Positionierungsmittelpaar (310) aufweist, welches einen Vorsprung (311), welcher sich parallel zur Hauptabstrahlrichtung (X) erstreckt, und eine zu dem Vorsprung (311) korrespondierende Öffnung (312) umfasst, und wobei
die Positioniereinrichtung (300) zur Ausrichtung der Lichteinkoppelfläche (210) entlang der Hauptabstrahlrichtung (X) der Lichtquelle (110) zumindest ein zweites Positionierungsmittelpaar (320) aufweist, welches einen Anschlag (321) und eine zu dem Anschlag (321) korrespondierende Anschlagsfläche (322) umfasst, wobei der Lichtleiter (200) jeweils ein Mittel des zumindest einen ersten Positionierungsmittelpaares (310) und des zumindest einen zweiten Positionierungsmittelpaares (320) aufweist und die Leiterplatte (100) jeweils das verbleibende Mittel des zumindest einen ersten Positionierungsmittelpaares (310) und des zumindest einen zweiten Positionierungsmittelpaares (320) aufweist, und wobei
der Lichtleiter (200) durch Einführen des Vorsprungs (311) des zumindest einen ersten Positionierungsmittelpaares (310) in die dazu korrespondierende Öffnung (312) des zumindest einen ersten Positionierungsmittelpaares (310) in die Endlage (P1) an der Leiterplatte (100) bezüglich der zumindest einen Lichtquelle (110) bringbar ist, wobei der eine Anschlag (321) des zumindest einen zweiten Positionierungsmittelpaares (320) bei Erreichen der Endlage (P1) an der dazu korrespondierenden Anschlagsfläche (322) des zumindest einen zweiten Positionierungsmittelpaares (320) anschlägt, und
- ein Sicherungsmittel (400), welches eingerichtet ist, den Lichtleiter (200) in der Endlage (P1) an der Leiterplatte (100) zu sichern und die Lichteinkoppelfläche (210) in Bezug auf die Lichtquelle (110) in Position zu halten,
**dadurch gekennzeichnet, dass**
das Sicherungsmittel (400) als eine federelastische U-förmige Klemme ausgebildet ist, wobei die Klemme lösbar an dem Lichtleiter (200) und der Leiterplatte (100) angeordnet ist und dabei den Lichtleiter (200) und die Leiterplatte (100) umgreift und gegeneinander drückt.

2. Beleuchtungsvorrichtung nach Anspruch 1, **dadurch gekennzeichnet, dass** das entsprechende Mittel des zumindest einen ersten Positionierungsmittelpaares (310), welches Mittel an dem Lichtleiter (200) angeordnet ist, einstückig mit dem Lichtleiter (200) hergestellt ist.

3. Beleuchtungsvorrichtung nach Anspruch 1 oder 2, **dadurch gekennzeichnet, dass** das entsprechende Mittel des zumindest einen zweiten Positionierungsmittelpaares (320), welches Mittel an dem Lichtleiter (200) angeordnet ist, einstückig mit dem Lichtleiter (200) hergestellt ist.

4. Beleuchtungsvorrichtung nach einem der Ansprüche 1 bis 3, **dadurch gekennzeichnet, dass** die Positioniereinrichtung (300) zumindest zwei, vorzugsweise genau zwei, erste Positionierungsmittelpaare (310) aufweist.

5. Beleuchtungsvorrichtung nach einem der Ansprüche 1 bis 4, **dadurch gekennzeichnet, dass** der Vorsprung (311) des zumindest einen ersten Positionierungsmittelpaares (310) an dem Lichtleiter (200) und die Öffnung (312) des zumindest einen ersten Positionierungsmittelpaares (310) an der Leiterplatte (100) angeordnet ist.

6. Beleuchtungsvorrichtung nach einem der Ansprüche 1 bis 5, **dadurch gekennzeichnet, dass** die Positioniereinrichtung (300) zumindest zwei, vorzugsweise genau zwei, zweite Positionierungsmittelpaare (320) aufweist.

7. Beleuchtungsvorrichtung nach einem der Ansprüche 1 bis 6, **dadurch gekennzeichnet, dass** der Anschlag (321) des zumindest einen zweiten Positionierungsmittelpaares (320) an dem Lichtleiter (200) und die Anschlagsfläche (322) des zumindest einen zweiten Positionierungsmittelpaares (320) an der Leiterplatte (100) angeordnet ist.

8. Beleuchtungsvorrichtung nach einem der Ansprüche 1 bis 7, **dadurch gekennzeichnet, dass** der Vorsprung (311) formschlüssig in die dazu korrespondierende Öffnung (312) eingreift.

9. Beleuchtungsvorrichtung nach einem der Ansprüche 1 bis 8, **dadurch gekennzeichnet, dass** der Vorsprung (311) die Leiterplatte (100) in der Endlage (P1) des Lichtleiters (200) an der Leiterplatte (100) durchsetzt.

10. Beleuchtungsvorrichtung nach einem der Ansprüche 1 bis 9, **dadurch gekennzeichnet, dass** die zumindest eine Lichtquelle (110) als LED ausgebildet ist.

11. Kraftfahrzeugscheinwerfer, umfassend zumindest eine Beleuchtungsvorrichtung (10) gemäß einem der Ansprüche 1 bis 10.

## Claims

1. Lighting device (10) for a motor vehicle headlamp, the lighting device (10) comprising
- a printed circuit board (100), having at least one light source (110) which is connected to the printed circuit board (100) and is set up to emit light in a main radiation direction (X),
- a light guide (200), having an end (201) which is designed as a light coupling surface (210), the light guide (200) being assigned to the at least one light source (110) for guiding light, which light can be coupled into the light guide (200) at the light coupling surface (210), wherein the light guide (200) can be brought into an end position (P1) on the printed circuit board (100), in which end position (P1) the light coupling surface (210) is oriented in a fixed orientation orthogonal to the main radiation direction (X) and at a fixed distance (d) along the main radiation direction (X) with respect to the light source (110),
- a positioning device (300) which is set up to determine the alignment of the light coupling surface (210) with respect to the light source (110) along the main radiation direction (X) of the light source (110) and in a normal plane of the main radiation direction (X), wherein the positioning device (300) has at least a first pair of positioning means (310) for aligning the light coupling surface (210) in the normal plane, which comprises a projection (311), which extends parallel to the main radiation direction (X), and an opening (312) corresponding to the projection (311), and wherein
the positioning device (300) for aligning the light coupling surface (210) along the main radiation direction (X) of the light source (110) has at least a second pair of positioning means (320), which comprises a stop (321) and a stop surface (322) corresponding to the stop (321), wherein the optical fiber (200) comprises a respective one of the at least one first pair of positioning means (310) and the at least one second pair of positioning means (320), and the printed circuit board (100) comprises the remaining one of the at least one first pair of positioning means (310) and the at least one second pair of positioning means (320), and wherein
the light guide (200) can be brought into the end position (P1) on the printed circuit board (100) with respect to the at least one light source (110) by inserting the projection (311) of the at least one first pair of positioning means (310) into the corresponding opening (312) of the at least one first pair of positioning means (310), wherein the one stop (321) of the at least one second pair of positioning means (320) strikes against the corresponding stop surface (322) of the at least one second pair of positioning means (320) when the end position (P1) is reached, and
- a securing means (400) which is set up to secure the light guide (200) in the end position (P1) on the printed circuit board (100) and to hold the light coupling surface (210) in position with respect to the light source (110),
**characterized in that**
the securing means (400) is designed as a spring-elastic U-shaped clamp, the clamp being detachably arranged on the light guide (200) and the printed circuit board (100) and thereby embracing the light guide (200) and the printed circuit board (100) and pressing them against each other.

2. Lighting device according to claim 1, **characterized in that** the corresponding means of the at least one first pair of positioning means (310), which means is arranged on the light guide (200), is manufactured in one piece with the light guide (200).

3. Lighting device according to claim 1 or 2, **characterized in that** the corresponding means of the at least one second pair of positioning means (320), which means is arranged on the light guide (200), is produced integrally with the light guide (200).

4. Lighting device according to one of claims 1 to 3, **characterized in that** the positioning device (300) has at least two, preferably exactly two, first pairs of positioning means (310).

5. Lighting device according to one of claims 1 to 4, **characterized in that** the projection (311) of the at least one first pair of positioning means (310) is arranged on the light guide (200) and the opening (312) of the at least one first pair of positioning means (310) is arranged on the printed circuit board (100).

6. Lighting device according to one of claims 1 to 5, **characterized in that** the positioning device (300) comprises at least two, preferably exactly two, second pairs of positioning means (320).

7. Lighting device according to one of claims 1 to 6, **characterized in that** the stop (321) of the at least one second pair of positioning means (320) is arranged on the light guide (200) and the stop surface (322) of the at least one second pair of positioning means (320) is arranged on the printed circuit board (100).

8. Lighting device according to one of claims 1 to 7, **characterized in that** the projection (311) engages positively in the opening (312) corresponding thereto.

9. Lighting device according to one of claims 1 to 8, **characterized in that** the projection (311) passes through the printed circuit board (100) in the end position (P1) of the light guide (200) on the printed circuit board (100).

10. Lighting device according to one of claims 1 to 9, **characterized in that** the at least one light source (110) is designed as an LED.

11. Motor vehicle headlamp, comprising at least one lighting device (10) according to any one of claims 1 to 10.

## Revendications

1. Dispositif d'éclairage (10) pour un phare de véhicule automobile, le dispositif d'éclairage (10) comprenant :
- une carte de circuit imprimé (100) comprenant au moins une source de lumière (110) connectée à la carte de circuit imprimé (100) et adaptée pour émettre de la lumière dans une direction d'émission principale (X),
- un guide de lumière (200) présentant une extrémité (201) qui est conçue comme une surface de couplage de lumière (210), le guide de lumière (200) étant associé à la au moins une source de lumière (110) pour guider la lumière, laquelle lumière peut être couplée dans le guide de lumière (200) au niveau de la surface de couplage de lumière (210), le guide de lumière (200) pouvant être amené dans une position finale (P1) sur la carte à circuits imprimés (100), position finale (P1) dans laquelle la surface de couplage de lumière (210) est orientée dans une orientation fixée orthogonale à la direction principale de rayonnement (X) et à une distance fixée (d) le long de la direction principale de rayonnement (X) par rapport à la source de lumière (110),
- un dispositif de positionnement (300) qui est conçu pour déterminer l'orientation de la surface de couplage de lumière (210) par rapport à la source de lumière (110) le long de la direction de rayonnement principale (X) de la source de lumière (110) ainsi que dans un plan normal de la direction de rayonnement principale (X), dans lequel le dispositif de positionnement (300) présente, pour l'orientation de la surface de couplage de lumière (210) dans le plan normal, au moins une première paire de moyens de positionnement (310) qui comprend une saillie (311) qui s'étend parallèlement à la direction de rayonnement principale (X) et une ouverture (312) correspondant à la saillie (311), et dans lequel
le dispositif de positionnement (300) présente, pour l'orientation de la surface de couplage de lumière (210) le long de la direction de rayonnement principale (X) de la source de lumière (110), au moins une deuxième paire de moyens de positionnement (320) qui comprend une butée (321) et une surface de butée (322) correspondant à la butée (321), dans lequel le guide de lumière (200) comprend respectivement un moyen de ladite au moins une première paire de moyens de positionnement (310) et de ladite au moins une deuxième paire de moyens de positionnement (320), et la carte de circuit imprimé (100) comprend respectivement le moyen restant de ladite au moins une première paire de moyens de positionnement (310) et de ladite au moins une deuxième paire de moyens de positionnement (320), et dans lequel
le guide de lumière (200) peut être amené dans la position finale (P1) sur la carte à circuits imprimés (100) par rapport à la au moins une source de lumière (110) en introduisant la saillie (311) de la au moins une première paire de moyens de positionnement (310) dans l'ouverture (312) correspondante de la au moins une première paire de moyens de positionnement (310), l'une des butées (321) de la au moins une deuxième paire de moyens de positionnement (320) venant buter, lorsque la position finale (P1) est atteinte, contre la surface de butée (322) correspondante de la au moins une deuxième paire de moyens de positionnement (320), et
- un moyen de blocage (400) qui est conçu pour bloquer le guide de lumière (200) dans la position finale (P1) sur la carte de circuit imprimé (100) et pour maintenir la surface de couplage de lumière (210) en position par rapport à la source de lumière (110),
**caractérisé en ce que**
le moyen de fixation (400) est réalisé sous la forme d'une pince élastique en forme de U, la pince étant disposée de manière amovible sur le guide de lumière (200) et la carte de circuit imprimé (100) et entourant ainsi le guide de lumière (200) et la carte de circuit imprimé (100) et les pressant l'un contre l'autre.

2. Dispositif d'éclairage selon la revendication 1, **caractérisé en ce que** le moyen correspondant de ladite au moins une première paire de moyens de positionnement (310), lequel moyen est disposé sur le guide de lumière (200), est réalisé d'un seul tenant avec le guide de lumière (200).

3. Dispositif d'éclairage selon la revendication 1 ou 2, **caractérisé en ce que** le moyen correspondant de ladite au moins une deuxième paire de moyens de positionnement (320), lequel moyen est disposé sur le guide de lumière (200), est réalisé d'un seul tenant avec le guide de lumière (200).

4. Dispositif d'éclairage selon l'une des revendications 1 à 3, **caractérisé en ce que** le dispositif de positionnement (300) comprend au moins deux, de préférence exactement deux, premières paires de moyens de positionnement (310).

5. Dispositif d'éclairage selon l'une des revendications 1 à 4, **caractérisé en ce que** la saillie (311) de ladite au moins une première paire de moyens de positionnement (310) est disposée sur le guide de lumière (200) et l'ouverture (312) de ladite au moins une première paire de moyens de positionnement (310) est disposée sur la carte de circuit imprimé (100).

6. Dispositif d'éclairage selon l'une des revendications 1 à 5, **caractérisé en ce que** le dispositif de positionnement (300) comprend au moins deux, de préférence exactement deux, deuxièmes paires de moyens de positionnement (320).

7. Dispositif d'éclairage selon l'une des revendications 1 à 6, **caractérisé en ce que** la butée (321) de ladite au moins une deuxième paire de moyens de positionnement (320) est disposée sur le guide de lumière (200) et la surface de butée (322) de ladite au moins une deuxième paire de moyens de positionnement (320) est disposée sur le circuit imprimé (100).

8. Dispositif d'éclairage selon l'une des revendications 1 à 7, **caractérisé en ce que** la saillie (311) s'engage par complémentarité de forme dans l'ouverture (312) qui lui correspond.

9. Dispositif d'éclairage selon l'une des revendications 1 à 8, **caractérisé en ce que** la saillie (311) traverse la carte de circuit imprimé (100) dans la position finale (P1) du guide de lumière (200) sur la carte de circuit imprimé (100).

10. Dispositif d'éclairage selon l'une des revendications 1 à 9, **caractérisé en ce que** ladite au moins une source lumineuse (110) est une LED.

11. Projecteur de véhicule automobile comprenant au moins un dispositif d'éclairage (10) selon l'une des revendications 1 à 10.
